(19) Europäisches Patentamt
European Patent Office
Office européen des brevets

(11) Veröffentlichungsnummer : **0 002 253**
**B1**

# (12) EUROPÄISCHE PATENTSCHRIFT

(45) Veröffentlichungstag der Patentschrift : **27.05.81**

(51) Int. Cl.³ : **C 09 D 5/02**, C 09 D 3/64, C 08 L 67/08

(21) Anmeldenummer : **78101479.0**

(22) Anmeldetag : **30.11.78**

## (54) Wässrige Dispersionen von als berzugsmittel bzw. Lackbindemittel geeigneten Harzen.

(30) Priorität : **05.12.77 DE 2754091**

(43) Veröffentlichungstag der Anmeldung : **13.06.79 (Patentblatt 79/12)**

(45) Bekanntmachung des Hinweises auf die Patenterteilung : **27.05.81 Patentblatt 81/21**

(84) Benannte Vertragsstaaten : **BE CH FR GB NL SE**

(56) Entgegenhaltungen :
**US-A-3 681 099**
**US-A-3 488 202**

(73) Patentinhaber : **Henkel Kommanditgesellschaft auf Aktien**
**-Patentabteilung- Postfach 1100 Henkelstrasse 67**
**D-4000 Düsseldorf 1 (DE)**

(72) Erfinder : **Eschwey, Helmut, Dr.**
**Leitenstorffer Strasse 24**
**D-4000 Düsseldorf 13 (DE)**
Erfinder : **Galinke, Joachim, Dr.**
**Falkenweg 6**
**D-4018 Langenfeld (DE)**
Erfinder : **Wiemers, Norbert, Dr.**
**Humboldtstrasse 51**
**D-4010 Monheim-Baumberg (DE)**

**EP 0 002 253 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

Wäßrige Dispersionen von als Überzugsmittel bzw. Lackbindemittel geeigneten Harzen

Die vorliegende Erfindung betrifft wäßrige Dispersionen von als Überzugsmittel bzw. Lackbindemittel geeigneten lufttrocknenden Harzen, die unter Einwirkung von Sauerstoff, insbesondere Luftsauerstoff, eventuell unterstützt durch Siccative, in den vernetzten Zustand überführt werden können und sich durch vorteilhafte physikalische und chemische Eigenschaften auszeichnen.

Es ist bekannt, zur Herstellung wäßriger Lackbindemittel Alkydharze mit hohen Säurezahlen zu verwenden, die in Form ihrer Aminsalze gute Wasserlöslichkeit aufweisen. Die Nachteile derartiger Systeme sind, abgesehen von der häufig unbefriedigenden Wasserbeständigkeit, in einem im allgemeinen erheblichen Gehalt an flüchtigen Aminen und Hilfslösemitteln zu sehen.

Es ist ferner bekannt, die Lackbindemittel durch den Einbau hydrophiler Ketten, insbesondere Polyäthylenglykolketten, so zu modifizieren, daß selbstemulgierende Alkydharze resultieren. Außerdem kann man auch ohne Einbau in das Harzmolekül selbst Polyglykolätherderivate, wie etwa die Addukte von Äthylenoxid an Fettalkohole, als niedermolekulare, nichtionische Emulgatoren einsetzen.

In beiden Fällen verbleibt aber der hydrophile Rest unverändert aktiv in der Lackschicht und verursacht aufgrund seiner Hydrophilie Anfälligkeit gegenüber Wasser. Zudem tritt häufig eine deutliche Verzögerung der Filmtrocknung und eine Erniedrigung der zu erreichenden Filmhärte ein.

Aufgabe der vorliegenden Erfindung war es daher, solche wäßrigen Lacksysteme zu finden, die sich gegenüber dem bekannten Stand der Technik durch verbesserte Eigenschaften, insbesondere hinsichtlich der Wasseranfälligkeit, Trocknungsgeschwindigkeit und Filmhärte, auszeichnen.

Erfindungsgemäß wird die Aufgabe gelöst durch wäßrige Dispersionen von als Überzugsmittel beziehungsweise Lackbindemittel geeigneten Harzen, bestehend aus lufttrocknenden Alkydharzen sowie olefinischen Doppelbindungen enthaltenden nichtionogenen oberflächenaktiven Substanzen auf Basis von Alkylphenolen und gegebenenfalls weiteren üblichen Hilfsstoffen, welche dadurch gekennzeichnet sind, daß sie als nichtionogene oberflächenaktive Substanzen Additionsprodukte von 5 bis 40 Mol Äthylenoxid zu 1 Mol Alkylphenol enthalten, wobei der Alkylrest 12 bis 18 Kohlenstoffatome und 1 bis 5 olefinische Doppelbindungen aufweist. Bevorzugt sind solche wäßrigen Dispersionen, welche als oberflächenaktive Verbindungen solche mit 5 bis 25 Mol Äthylenoxid enthalten und in einer Menge von 0,5 bis 10 Gewichtsprozent, bezogen auf den Harzanteil, vorliegen. Günstig ist es, wenn die wäßrigen Dispersionen die oberflächenaktiven Verbindungen in einer Menge von 1 bis 8 Gewichtsprozent, bezogen auf den Harzanteil, enthalten.

Erfindungsgemäß werden ganz bestimmte Verbindungen eingesetzt, die bisher überhaupt nicht als Emulgatoren in Betracht gezogen wurden. Typische Vertreter der als Basis für die oberflächenaktiven Verbindungen geeigneten Derivate sind die Cashew Nutshell Liquids. Diese Naturprodukte werden zur Herstellung von Kondensatharzen (mit Formaldehyd) als Schmiermittel, Konservierungsmittel und zur Ameisenbekämpfung eingesetzt. Für oberflächenaktive Mittel wurden sie bisher nicht vorgeschlagen.

Bei den erfindungsgemäß als Basis verwendeten Verbindungen handelt es sich um phenolische Verbindungen. Eine Gruppe kann beispielsweise unter dem Sammelbegriff Cardanol zusammengefaßt werden. Es handelt sich hierbei — wie bereits angedeutet — um die Bestandteile des Cashew-Nußschalenöls Anacardsäure (I) und Cardol (II) sowie das Decarboxylierungsprodukt der Anacardsäure, das eigentliche Cardanol (III), (vergl. J. Stut, Farbe und Lack, 71. Jahrgang Nr. 12 (1965) 1027).

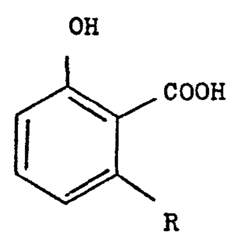
(I)

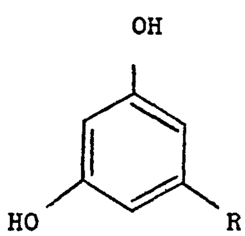
(II)

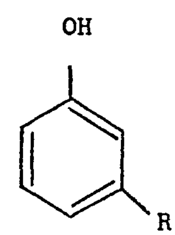
(III)

R = $C_{15}H_{31}$, $C_{15}H_{29}$, $C_{15}H_{27}$, $C_{15}H_{25}$

Der hydrophobe Molekülteil der oberflächenaktiven Substanzen, der den lufttrocknenden Charakter verleiht, ist durch eine Jodzahl von 150 bis 400, vorzugsweise 200 bis 350 charakterisiert. Da es sich im Fall des Cashew-Nußschalenöls um ein Naturprodukt handelt, unterliegt die Jodzahl Schwankungen.

Die Addition des Äthylenoxids an die vorstehend genannten phenolischen Verbindungen erfolgt in bekannter Weise unter katalytischen Einfluß von Alkalien, wie Natrium- oder Kaliumhydroxid, Alkalialkoholaten, wie Natrium- oder Kaliummethylat oder- butylat.

Zur Herstellung der erfindungsgemäßen Dispersionen selbst werden die Emulgatoren zweckmäßig in einer Menge von 0,5 bis 10, insbesondere von 1 bis 8 Gewichtsprozent, bezogen auf den gesamten Harzanteil, eingesetzt.

Als Lackbindemittel können solche Alkydharze eingesetzt werden, die durch Aminneutralisation allein nicht in wasserlösliche oder wasserverdünnbare Form überführt werden können, also solche, die üblicherweise in organischen Lösungsmitteln eingesetzt werden. Diese Alkydharze sollen eine Säurezahl von etwa 5 bis 40, vorzugsweise eine Säurezahl von 5 bis 25 aufweisen. Ihr Fettsäuregehalt soll, wie bei lufttrocknenden Alkydharzen allgemein üblich, zwischen 25 und 80, vorzugsweise zwischen 45 und 70 Gewichtsprozent, berechnet als Fettsäureglyzerid, betragen. Im allgemeinen wird so viel an Harz eingesetzt, daß die fertige Dispersion einen Harzfeststoffgehalt von etwa 30 bis 70 Gewichtsprozent aufweist.

Die Herstellung der Dispersionen erfolgt nach konventionellen Dispergier-bzw. Emulgierverfahren bei Temperaturen zwischen etwa 20 °C und 100 °C, gegebenenfalls unter Druck bei Temperaturen über 100 °C. Dabei können auch in untergeordneter Menge bestimmte wassermischbare bzw. zumindest teilweise in Wasser lösliche Lösungsmittel wie Äthylenglykolmonobutyläther oder Butanol oder dergleichen mitverwendet werden. Ebenso kann es zweckmäßig sein, eine untergeordnete Menge nicht mit Wasser mischbarer organischer Lösungsmittel wie Testbenzin oder Xylol mitzuverwenden. Da die genannten Lösungsmittel in erster Linie als Verlaufshilfsmittel dienen, wird ihr Anteil 15 Gewichtsprozent, insbesondere aber 10 Gewichtsprozent, bezogen auf die fertige Dispersion, nicht übersteigen. Ferner kann es zweckmäßig sein, geringe Mengen an flüchtigen basischen Stickstoffverbindungen wie Ammoniak, Triäthylamin oder Dimethyläthanolamin zuzusetzen. Ihre Menge sollte aber 2 Gewichtsprozent, bezogen auf die fertige Dispersion, nicht übersteigen.

Bei den erfindungsgemäßen Dispersionen handelt es sich um Öl-in-Wasser-Emulsionen, die unbegrenzt mit Wasser verdünnbar sind. Im Gegensatz zu zahlreichen bekannten waserverdünnbaren, aminneutralisierten Systemen zeigen die erfindungsgemäßen Dispersionen auch in Abwesenheit organischer Hilfslösungsmittel kein Maximum in der Verdünnungskurve, d.h. keine Viskositätsanomalie (vergl. z.B. E. Hüttmann et al., Plaste und Kautschuk *17* (1970) 202).

Die erfindungsgemäßen Dispersionen können nach herkömmlichen Methoden pigmentiert und mit Siccativen versetzt werden. In Abwesenheit organischer Hilfslösungsmittel gelangen vorteilhafterweise wasserlösliche bzw. handelsübliche wasseremulgierbare Trockenstoffe zum Einsatz, in Gegenwart unpolarer organischer Hilfslösungsmittel können ebenso konventionelle Metallsalze wie Naphthenate und/oder Octoate von Schwermetallen wie Blei und Kobalt oder dergleichen eingesetzt werden.

Die Dispersionen können zum Überziehen der verschiedensten Materialien wie Holz, Glas oder Metalle u.w. mehr verwendet werden. Nach der Lufttrocknung zeichnen sich die Überzüge durch ihre verbesserte Wasserbeständigkeit sowie durch ihre hohe Härte aus. In der Wasserbeständigkeit sind sie sowohl den herkömmlichen Emulsionen auf Basis nichtreaktiver Emulgatoren als auch den wasserverdünnbaren aminneutralisierten Systemen hoher Säurezahl deutlich überlegen. Hervorzuheben sind auch die Vorteile, die durch das Fehlen bzw. den äußerst geringen Gehalt an flüchtigen organischen Lösungsmitteln und flüchtigen Aminen bzw. Ammoniak gegeben sind.

## Beispiele

Zur Herstellung der erfindungsgemäßen Dispersionen wurden die folgenden mit I-III bezeichneten Alkydharze verwendet.

### Alkydharz I

Tallölmodifiziertes Alkydharz mit einem Ölgehalt von 66 Gewichtsprozent, einem Phthalsäureanhydridgehalt von 24 Gewichtsprozent sowie einer Säurezahl von 10.

### Alkydharz II

Leinölmodifiziertes Alkydharz mit einem Ölgehalt von 50 Gewichtsprozent, einem Phthalsäureanhydridgehalt von 32 Gewichtsprozent sowie einer Säurezahl von 10.

### Alkydharz III

Sojaölmodifiziertes Alkydharz mit einem Ölgehalt von 60 Gewichtsprozent, einem Phthalsäureanhydridgehalt von 28 Gewichtsprozent sowie einer Säurezahl von 12.

### Vergleichsalkydharz a

Mit pflanzlichen Fettsäuren modifiziertes Alkydharz mit einem Ölgehalt von 50 Gewichtsprozent, einem Phthalsäureanhydridgehalt von 19 Gewichtsprozent sowie einer Säurezahl von 48. Vergleichsalkydharz a lag vor als 63 %ige Lösung in Äthylenglykolmonobutyläther.

Die Herstellung der erfindungsgemäß einzusetzenden Emulgatoren erfolgte, indem man ein Gemish aus 90 Gewichtsprozent Cardanol und 10 Gewichtsprozent Cardol, das eine Jodzahl von 346 hatte, mit

verschiedenen Mengen an Äthylenoxid unter Zusatz von 2 Gewichtsprozent Natriummethylat bei 165 °C und 10 atü während 5 Stunden einwirken ließ.

In der nachfolgenden Tabelle 1 ist in Abhängigkeit von der Bezeichnung des Emulgators A bis E angegeben, wieviel Mol Äthylenoxid auf 1 Mol Phenolverbindung eingesetzt wurden.

Tabelle 1

| Emulgator | Mol Äthylenoxid |
|---|---|
| A | 5 |
| B | 7,5 |
| C | 10 |
| D | 15 |
| E | 25 |

Als Vergleichsemulgator a diente ein Umsetzungsprodukt von 1 Mol Nonylphenol mit 15 Mol Äthylenoxid, das unter den gleichen Bedingungen hergestellt worden war.

Herstellung der Dispersionen

Alkydharz, Emulgator, Wasser, Stickstoffbase und gegebenenfalls das organische Hilfslösungsmittel (das eingesetzte Testbenzin hatte einen Siedebereich von 145 bis 200 °C) wurden vorgelegt und auf 80 °C erwärmt. Dann wurde unter Verwendung eines hochtourigen Rührers (10 000 Upm) dispergiert. Bei Raumtemperatur wurden die Dispersionen mit 0,1 g Kobaltnaphthenat und 0,9 g Bleinaphthenat (berechnet als Co bzw. Pb), bezogen auf Festharz, versetzt. Die erfindungsgemäßen Dispersionen, die sich beliebig mit Wasser verdünnen ließen, hatten folgende Zusammensetzung:

Beispiel 1

Alkydharz 1 : 39,0 Gew.T.
Emulgator A : 1,0 Gew.T.
Ammoniak (36 Gew.% wäßr. Lösung)
Testbenzin : 10,0 Gew.T.
Wasser : 49,0 Gew.T.

Beispiel 2

Alkydharz 1 : 58,0 Gew.T.
Emulgator B : 2,0 Gew.T.
Triäthylamin : 1,5 Gew.T.
Wasser : 38,5 Gew.T.

Beispiel 3

Alkydharz 2 : 49,0 Gew.T.
Emulgator C : 1,0 Gew.T.
Triäthylamin : 1,0 Gew.T.
Testbenzin : 5,0 Gew.T.
Wasser : 44 0 Gew.T.

Beispiel 4

Alkydharz 2 : 48,5 Gew.T.
Emulgator D : 1,5 Gew.T.
Triäthylamin : 1,0 Gew.T.
Testbenzin : 15,0 Gew.T.
Wasser : 34,0 Gew.T.

Beispiel 5

| | | |
|---|---|---|
| Alkydharz 3 | : | 39,0 Gew.T. |
| Emulgator E | : | 1,0 Gew.T. |
| Triäthylamin | : | 1,0 Gew.T. |
| Wasser | : | 59,0 Gew.T. |

Vergleichsbeispiel i

| | | |
|---|---|---|
| Alkydharz 1 | : | 49,0 Gew.T. |
| Vergleichsemulgator a | : | 1,5 Gew.T. |
| Triäthylamin | : | 1,0 Gew.T. |
| Testbenzin | : | 15,0 Gew.T. |
| Wasser | : | 33,5 Gew.T. |

Vergleichsbeispiel ii

| | | |
|---|---|---|
| Vergleichsalkydharz a | : | 50,0 Gew.T. |
| Triäthylamin | : | 4,5 Gew.T. |
| Äthylenglykolmonobutyläther | : | 29,0 Gew.T. |
| Wasser | : | 16,5 Gew.T. |

Zur Prüfung der mittels der Dispersionen herstellbaren Filme wurden dieselben auf Glasplatten aufgestrichen und 7 Tage lang im Klimaraum bei 20 °C und 60 % relativer Luftfeuchtigkeit gelagert. Die Trockenfilmdicke betrug 30 μm. Die Bestimmung der Filmhärte erfolgte in Abständen von 24 Stunden durch Messung der Pendelhärte nach DIN 53 157.

Zur Ermittlung der Wasserbeständigkeit wurden die 7 Tage getrockneten Filme bei 40 °C in destilliertes Wasser eingetaucht und im Abstand von 1, 5, 10 und 24 Stunden hinsichtlich Bläschenbildung und Ablöseerscheinungen beurteilt. Die Beurteilung erfolgte nach einem 5-Punkte-System:

1 Film unverändert
2 beginnende Bläschenbildung am Rand
3 leichte Bläschenbildung auf der gesamten Filmfläche
4 starke Bläschenbildung auf der gesamten Filmfläche
5 Film ist vom Untergrund abgelöst.

In der nachfolgenden Tabelle 2 ist in Abhängigkeit vom Beispiel die Pendelhärte und das Verhalten gegenüber destilliertem Wasser gemäß vorstehenden Schema angegeben.

Tabelle 2

| Beispiel | Pendelhärte (sec) (DIN 53 157) | | | Wasserbeständigkeit | | | |
|---|---|---|---|---|---|---|---|
| | 1 Tag | 3 Tage | 7 Tage | 1h | 5h | 10h | 24h |
| 1 | 26 | 45 | 58 | 1 | 1 | 1 | 2-3 |
| 2 | 22 | 43 | 53 | 1 | 1 | 1 | 2 |
| 3 | 20 | 41 | 54 | 1 | 1 | 1-2 | 2-3 |
| 4 | 23 | 40 | 52 | 1 | 1 | 1-2 | 2-3 |
| 5 | 24 | 40 | 54 | 1 | 1 | 1-2 | 2-3 |
| Vergleich i | 18 | 25 | 39 | 1 | 2 | 3 | 4 |
| Vergleich ii | 25 | 40 | 54 | 1 | 2-3 | 4 | 5 |

**Ansprüche**

1. Wäßrige Dispersionen von als Überzugsmittel beziehungsweise Lackbindemittel geeigneten Harzen, bestehend aus lufttrocknenden Alkydharzen sowie olefinischen Doppelbindungen enthaltenden nichtionogenen oberflächenaktiven Substanzen auf Basis von Alkylphenolen und gegebenenfalls weiteren üblichen Hilfsstoffen, dadurch gekennzeichnet, daß sie als nichtionogene oberflächenaktive Substanzen Additionsprodukte von 5 bis 40 Mol Äthylenoxid zu 1 Mol Alkylphenol enthalten, wobei der Alkylrest 12 bis 18 Kohlenstoffatome und 1 bis 5 olefinische Doppelbindungen aufweist.

2. Wäßrige Dispersionen nach Anspruch 1, dadurch gekennzeichnet, daß die oberflächenaktiven

Verbindungen 5 bis 25 Mol Äthylenoxid enthalten und in einer Menge von 0,5 bis 10 Gewichtsprozent, bezogen auf den Harzanteil, vorliegen.

3. Wäßrige Dispersionen nach Anspruch 1 und 2, dadurch gekennzeichnet, daß die oberflächenaktiven Verbindungen in einer Menge von 1 bis 8 Gewichtsprozent, bezogen auf den Harzanteil, vorliegen.

**Claims**

1. Aqueous dispersions of resins suitable for use as coating compositions or lacquer binders, consisting of air-drying alkyd resins and nonionic alkyl-phenol-based surface-active substances containing olefinic double bonds and, optionally, other standard auxiliaries, characterised in that they contain as nonionic surface-active substances addition products of 5 to 40 moles of ethylene oxide to 1 mole of alkyl phenol, the alkyl radical containing from 12 to 18 carbon atoms and from 1 to 5 olefinic double bonds.

2. Aqueous dispersions as claimed in Claim 1, characterised in that the surface-active compounds contain from 5 to 25 moles of ethylene oxide and are present in a quantity of from 0.5 to 10 % by weight, based on the resin content.

3. Aqueous dispersions as claimed in Claims 1 and 2, characterised in that the surface-active compounds are present in a quantity of from 1 to 8 % by weight, based on the resin content.

**Revendications**

1. Dispersions aqueuses de résines appropriées comme agents de revêtement ou comme agents liants de vernis, ces dispersions étant constituées de résines alkydes séchant à l'air, ainsi que de substances tensio-actives non ionogènes contenant des doubles liaisons oléfiniques et à base d'alkylphénols et éventuellement d'autres substances auxiliaires habituelles, caractérisées en ce que, comme substances tensio-actives non ionogènes, elles contiennent des produits d'addition de 5 à 40 moles d'oxyde d'éthylène à 1 mole d'alkylphénol, le groupe alkyle contenant 12 à 18 atomes de carbone et 1 à 5 doubles liaisons oléfiniques.

2. Dispersions aqueuses suivant la revendication 1, caractérisées en ce que les composés tensio-actifs contiennent 5 à 25 moles d'oxyde d'éthylène et sont présents en une quantité de 0,5 à 10 % en poids, calculés sur la quantité de résine.

3. Dispersions aqueuses suivant les revendications 1 et 2, caractérisées en ce que les composés tensio-actifs sont présents en une quantité de 1 à 8 % en poids, calculés sur la quantité de résine.